# EUROPEAN PATENT SPECIFICATION

(11) **EP 2 348 678 B1**
(45) Date of publication and mention of the grant of the patent: **20.03.2013**
(21) Application number: 09828549.7
(22) Date of filing: 05.05.2009
(51) Int. Cl.: H04L 12/24

(54) **NETWORK TOPOLOGY METHOD, DEVICE AND SYSTEM**
NETZWERKTOPOLOGIEVERFAHREN, -GERÄT UND -SYSTEM
PROCÉDÉ, DISPOSITIF ET SYSTÈME DE TOPOLOGIE D UN RÉSEAU

(30) Priority: 03.11.2008 CN 200810175967
(43) Date of publication of application: 27.07.2011
(73) Proprietor: Huawei Technologies Co., Ltd., Longgang District, Shenzhen Guangdong 518129 (CN)
(72) Inventor: LIU, Qiang c/o Huawei Technologies Co., Ltd. Int.Prop.Dept., Shenzhen (CN)
(74) Representative: Körber, Martin Hans
(86) International application number: PCT/CN2009/071635
(87) International publication number: WO 2010/060288

(56) References cited:
- EP-A1- 0 892 522
- EP-A2- 1 411 687
- WO-A1-00/42739
- WO-A1-2008/089445
- CN-A- 1 831 830
- CN-A- 101 040 486
- CN-A- 101 162 154
- US-A1- 2004 085 961
- US-A1- 2007 097 883

## Description

### FIELD OF THE INVENTION

The present invention relates to the field of communications technology, and in particular, to a network topology layout method, device, and system.

### BACKGROUND OF THE INVENTION

In a telecommunication Operating Support System (OSS), a network topology of all telecommunication equipment is usually shown in a network topology diagram graphically.

Network topology diagrams are generally categorized into physical topology diagrams and logical topology diagrams. In a physical topology diagram, each equipment node is drawn on a geographic map according to actual geodetic coordinates of equipment nodes, so that the actual spatial distribution of a whole network can be shown objectively. In particular, the location of each equipment node is the actual geodetic coordinates of the equipment nodes.

In a logical topology diagram, a logical relationship between network element equipment, a logical relationship between connected equipment, and a topological relationship between ports can be shown graphically. In the logical topology diagram, the network element equipment, the connected equipment, and the ports are all referred to as nodes. The location of a node in a logical topology diagram does not depend on the actual physical coordinates of the node, but depend on information such as a topology of a network in which the node is and a hierarchical relationship of the node in the network. The nodes are arranged according to the logical relationship between nodes, so that the whole network topology diagram can match the actual topology of the network, which makes the management and maintenance of the whole network by a user more convenient. Therefore, how to arrange the nodes becomes a critical issue in layout of the network topology diagram.

In the prior art, the common layout methods for a network topology diagram include: a hierarchical layout method, a tree-shaped layout method, a bus layout method, a grid layout method, and an embedded layout method. For example, in the hierarchical layout method, all nodes in a network are arranged layer by layer in a certain sequence according to a pre-determined hierarchy, so that the hierarchical relationship of the whole network is shown. In the tree-shaped layout method, all nodes in a network are arranged layer by layer from the root to the leaves according to a tree-shaped hierarchy, so that the hierarchical relationship of the whole network is shown. In the bus layout method, all nodes in a network are connected to each other and are distributed on one side of a bus uniformly, so that the connection relationship of the whole network is shown.

However, the prior art has the following problems:

All of the layout methods for the network topology diagram in the prior art are single-mode layout methods, which are suitable for the topology layout of a single network structure. Therefore, for a complex network structure, the preceding methods fail to truly reflect the structure of the whole network.

US 2004/085961 A 1 discloses a method for advertising reachable address information in a network. In one embodiment, the invention is implemented as part of a process used by logical nodes for advertising reachability information for members of a group of nodes represented by the logical node. The invention may be used with any network that involves the aggregation of nodes and nodal elements (such as reachability information) into logical nodes, including, without limitation, networks using the PNNI and IP protocols. In one embodiment, the invention provides an "exception" instruction that allows detailed reachable address information to be advertised for an address that would otherwise be included in summary address information. The invention allows detailed reachability information to be advertised for the particular address while still allowing summarization of reachable address information for addresses sharing a common prefix with the "exception" address. The invention thereby allows detailed information to be advertised where needed while allowing summary address information to be advertised where such detailed information is not needed, thereby conserving network bandwidth.

EP1411687A2 discloses a layered network node. A layered network node of which a network it belongs is divided up into cells which are constituted by a plurality of nodes; the cells are defined as virtual nodes; if links exist which connect the interiors of the virtual nodes and the exterior, contact points between them are defined as interfaces of the virtual nodes; the virtual network constituted by the virtual nodes is further divided up into cells and making them into virtual nodes; said virtual network is defined as a network of a higher level with respect to the initial virtual network; by performing said operation of division into cells and making into virtual nodes once or a plurality of times, the layered network is constituted; path computation is performed from the source node to a destination node in a stepwise manner by dispersing it over the various layers.

EP0892522 A1 discloses a method and arrangement to aggregate parameter information in a hierarchically structured network. To aggregate parameter information related to links and nodes (A.1, A.2, A.3, A.4, A.5, A.6, A.7, A.8) of a subnetwork (SNA) on a first hierarchical level (L1) of a hierarchically structured network, this parameter information is separated in balanced parameter information and unbalanced parameter information. The balanced parameter information is condensed using either heuristic or mathematical techniques. In this way, a first port of parameter information (X1, X2, X3, X4) related to virtual links of a virtual complex node (A) which represents the subnetwork (SNA) on a second hierarchical level (L2) of the network is generated. This second hierarchical level (L2) is a condensed abstraction of the first hierarchical level (L1). The unbalanced parameter information of the subnetwork (SNA) is advertised uncondensed in the virtual complex node (A) by adding exceptional virtual links to this virtual complex node (A). In this way, a second part of the parameter information of the virtual complex node (A) is generated.

### SUMMARY OF THE INVENTION

The present invention provides a network topology layout method, device, and system, so as to obtain a network topology close to an actual networking structure in case of a complex network structure.

The technical solutions of the present invention are as follows:

According to the first aspect of the present invention a network topology layout method includes:
obtaining a set of subnetworks, in which there is a hierarchical relationship between the subnetworks, a subnetwork of the top layer consists of one virtual node, a subnetwork of a non-bottom layer comprises at least one virtual node, and the virtual node comprises at least one node or at least one virtual node of a lower layer, wherein the virtual node is composed by the nodes that have the single network topology in the corresponding layer, and the subnetwork of the non-bottom layer represents the subnetwork of each layer except the subnetwork of the very top layer and the subnetwork of the very bottom layer;
obtaining a topology layout policy corresponding to a virtual node in a subnetwork of each layer in the set of subnetworks and information of nodes that compose the virtual node, wherein the topology layout policy indicates the type of the network topology of the nodes that compose the virtual node; and
   performing topology layout of the virtual node from top to bottom shown in the hierarchical relationship between the subnetworks, and the obtained topology layout policy of the virtual node and information of the nodes that compose the virtual node, wherein before the obtaining (11) the hierarchical subnetwork set, the method further comprises:
grouping nodes that have a single network topology in a network,
wherein the grouping nodes of a single network topology in the network comprises: from the bottom layer of the network, composing, by nodes that have the single network topology in a currently processed layer, one or more virtual nodes to obtain a subnetwork of the currently processed layer, wherein a location of each of the virtual nodes corresponds to a location of one node of the nodes that have the single network topology; establishing a topological connection relationship between the virtual node and the nodes that are not grouped into the subnetwork of the currently processed layer, to obtain a subnetwork of an upper layer, wherein the subnetwork of the upper layer has a single network topology; and setting a topology layout policy of the virtual node in the subnetwork of the currently processed layer and information of the nodes that compose the virtual node.

According to the second aspect of the present invention a network topology layout device includes:
a subnetwork set obtaining unit, configured to obtain a set of subnetworks, in which there is a hierarchical relationship between the subnetworks, a subnetwork of the top layer consists of one virtual node, a subnetwork of a non-bottom layer comprises at least one virtual node, and the virtual node comprises at least one node or at least one virtual node of a lower layer, wherein the virtual node is composed by the nodes that have the single network topology in the corresponding layer, and the subnetwork of the non-bottom layer represents the subnetwork of each layer except the subnetwork of the very top layer and the subnetwork of the very bottom layer;
an information obtaining unit, configured to obtain a topology layout policy corresponding to a virtual node in a subnetwork of each layer in the set of subnetworks and information of nodes that compose the virtual node, wherein the topology layout policy indicates the type of the network topology of the nodes that compose the virtual node; and
a topology layout unit, configured to perform topology layout of the virtual node from top to bottom shown in the hierarchical relationship between the subnetworks, and the obtained topology layout policy of the virtual node and information of the nodes that compose the virtual node;
a grouping processing unit (64), configured to group nodes that have a single network topology in a network, wherein the grouping processing unit (64) comprises: a subnetwork dividing module (641), configured to from the bottom layer of the network, compose, by nodes (5, 8, 9, 10) that have the single network topology in a currently processed layer, one or more virtual nodes to obtain a subnetwork of the currently processed layer, wherein a location of each of the virtual nodes corresponds to a location of one node of the nodes that have the single network topology; a topological relationship establishing module (642), configured to establish a topological connection relationship between the virtual node (A) and the nodes (3, 4, 6, 7) that are not grouped into the subnetwork of the currently processed layer, to obtain a subnetwork of an upper layer, wherein the subnetwork of the upper layer has a single network topology; and a setting module (643), configured to set the topology layout policy of the virtual node in the subnetwork of the currently processed layer and the information of the nodes that compose the virtual node.

According to the third aspect of the present invention a network topology layout system includes:
a network topology layout apparatus, configured to a set of subnetworks, in which there is a hierarchical relationship between the subnetworks, a subnetwork of the top layer consists of one virtual node, a subnetwork of a non-bottom layer comprises at least one virtual node, and the virtual node comprises at least one node or at least one virtual node of a lower layer, wherein the virtual node is composed by the nodes that have the single network topology in the corresponding layer, and the subnetwork of the non-bottom layer represents the subnetwork of each layer except the subnetwork of the very top layer and the subnetwork of the very bottom layer; and perform topology layout of a virtual node from top to bottom shown in the hierarchical relationship between the subnetworks, and an obtained topology layout policy corresponding to a virtual node in a subnetwork of each layer in the set of subnetworks and information of nodes that compose the virtual node, wherein before the obtaining (11) the hierarchical subnetwork set, the method further comprises: grouping nodes that have a single network topology in a network, wherein the grouping nodes of a single network topology in the network comprises: from the bottom layer of the network, composing, by nodes that have the single network topology in a currently processed layer, one or more virtual nodes to obtain a subnetwork of the currently processed layer, wherein a location of each of the virtual nodes corresponds to a location of one node of the nodes that have the single network topology; establishing a topological connection relationship between the virtual node and the nodes that are not grouped into the subnetwork of the currently processed layer, to obtain a subnetwork of an upper layer, wherein the subnetwork of the upper layer has a single network topology; and setting a topology layout policy of the virtual node in the subnetwork of the currently processed layer and information of the nodes that compose the virtual node; and
   a plotter, configured to draw a network topology diagram according to a topology layout result of the network topology layout apparatus.

In the present invention, a set of subnetworks is obtained, in which there is a hierarchical relationship between the subnetworks. a subnetwork of the top layer consists of one virtual node, a subnetwork of a non-bottom layer includes at least one virtual node, and the virtual node includes at least one node or at least one virtual node of a lower layer. Topology layout of the virtual node is performed according to the hierarchical relationship between the subnetworks, and an obtained topology layout policy of a virtual node in a subnetwork of each layer in the set of subnetworks and information of nodes that compose the virtual node. Therefore, the topology layout of each layer of the subnetworks is performed, and the topology layout of a complex network structure is achieved. Therefore, when the topology layout of a complex network is performed according to the present invention, the topology of the network can be more truly reflected than by using a layout method of a single network algorithm in the prior art.

### BRIEF DESCRIPTION OF THE DRAWINGS

FIG. 1 is a flow chart of a network topology layout method according to a first embodiment of the present invention;
FIG. 2 is a schematic diagram of the network topology layout method according to the first embodiment of the present invention;
FIG. 3 is a schematic structural view of a network according to a second embodiment of the present invention;
FIG. 4 is a flow chart of a network topology layout method according to the second embodiment of the present invention;
FIG 5 is a schematic diagram of a network topology after a first subnetwork is formed according to an embodiment of the present invention;
FIG 6 is a schematic diagram of a network topology after a second subnetwork is formed according to an embodiment of the present invention;
FIG. 7 is a schematic diagram of a network topology layout device according to a third embodiment of the present invention;
FIG. 8 is a structural view of the network topology layout device according to the third embodiment of the present invention; and
FIG. 9 is a schematic diagram of a network topology layout system according to a fourth embodiment of the present invention.

### DETAILED DESCRIPTION OF THE EMBODIMENTS

To illustrate the technical solutions according to the embodiments of the present invention more clearly, the accompanying drawings for describing the embodiments are introduced briefly in the following.

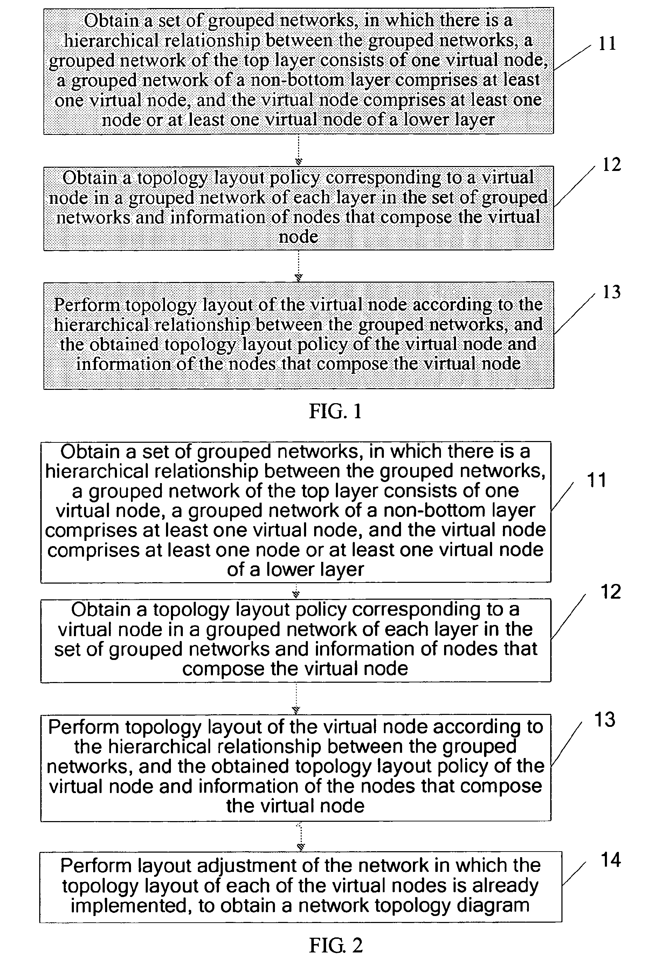

In order to overcome the drawback in the existing network topology layout methods that a complex network structure fails to be truly reflected, a first embodiment of the present invention provides a network topology layout method. As shown in FIG. 1, the method according to the first embodiment of the present invention includes the following steps:

Step 11: Obtain a set of subnetworks, in which there is a hierarchical relationship between the subnetworks, a subnetwork of the top layer consists of one virtual node, a subnetwork of a non-bottom layer includes at least one virtual node, and the virtual node includes at least one node or at least one virtual node of a lower layer;

In the embodiment of the present invention, the set of subnetworks means that a final demonstration of a network may be considered as a set of multiple hierarchical subnetworks after a grouping process of the network is performed. Here, "the subnetwork of the top layer" represents the subnetwork of the very top layer of the set of subnetworks, and "the subnetwork of the non-bottom layer" represents the subnetwork of each layer except the subnetwork of the very top layer and the subnetwork of the very bottom layer.

In specific implementation, at least two following methods can be employed to obtain the hierarchical subnetwork set. In the first method, a topology layout operator designates network grouping information to obtain the set of subnetworks. In the second method, group nodes that have a single network topology in a network to obtain the set of subnetworks. The second method specifically includes the following steps:

Step 111: From the very bottom layer of a network and according to implemented service functions, compose, by nodes that have the single network topology in a currently processed layer, one or more virtual nodes to obtain a subnetwork of the currently processed layer. A location of each of the virtual nodes corresponds to a location of one node of the nodes that have the single network topology;

The single network topology herein may be a ring topology, a star topology, a tree topology, a bus topology, a mesh topology, a grid topology, and an embedded topology. The concept of the node may be the same as that in the prior art, which may represent a city, a bureau, a base station, an equipment room, equipment, virtual equipment, a network element, a virtual network element, a rack, a frame, an equipment port, a well, a pole, and a junction box.

The composing, by the nodes of the single network topology in the currently processed layer, the at least one virtual node includes: determining the number of the virtual node according to a specific situation of the network topology. A basic principle for determining the number of the virtual node is: it should be guaranteed that an overall topology of the network does not change after the nodes of the single network topology compose the virtual node.

Step 112: Establish a topological connection relationship between the virtual node and the nodes that are not grouped into the subnetwork of the currently processed layer, to obtain a subnetwork of an upper layer.

In order to reflect the network structure truly and accurately, in step 111, the topological connection relationship between the virtual node and the non-grouped node outside the subnetwork may be established according to a topological connection relationship between each of the nodes in the subnetwork of the currently processed layer and the non-grouped node of the subnetwork.

For example, assuming that nodes A, B, and C of a ring topology in a currently processed layer compose a virtual node D, and the node C and nodes E, F, and G compose a ring topology, after the virtual node D is obtained, a topological relationship between the virtual node D and the nodes E, F, and G is also a ring topology.

Step 113: Set and store a topology layout policy of the virtual node in the subnetwork of the currently processed layer and information of the nodes that compose the virtual node.

The topology layout policy indicates the type of the network topology of the nodes that compose the virtual node. For example, if the nodes are of the ring topology, the corresponding topology layout policy of the virtual node is the ring topology.

In addition, when the subnetwork of the currently processed layer is the subnetwork of a non-bottom layer, information of virtual nodes that belong to the same subnetwork as the virtual node may also be set. The virtual nodes that belong to the same subnetwork mean that when the nodes of the single network topology of the currently processed layer compose multiple virtual nodes in step 111, the multiple virtual nodes are the virtual nodes that belong to the same subnetwork.

When the network includes multiple layers, steps 111 to 113 are repeated until the whole network is turned to a virtual node, and the virtual node may include multiple virtual nodes of lower layers and multiple nodes.

Step 12: Obtain a topology layout policy corresponding to a virtual node in a subnetwork of each layer in the set of subnetworks and information of nodes that compose the virtual node.

When the subnetwork of the currently processed layer is the subnetwork of the non-bottom layer, the information of the virtual nodes that belong to the same subnetwork as the virtual node may also be obtained.

Step 13: Perform topology layout of the virtual node according to the hierarchical relationship between the subnetworks, and the obtained topology layout policy of the virtual node and information of the nodes that compose the virtual node.

Because in the grouping process of the network, some characteristics of the nodes of the network of the bottom layer are integrated into the network of an upper layer, the topology layout may be performed from top to bottom. The performing of the topology layout may include the following steps.

Step 131: From the subnetwork of the top layer in the set of subnetworks, judge whether there are virtual nodes that belong to a same subnetwork as the virtual node in the subnetwork of the currently processed layer.

The judging whether there are virtual nodes that belong to a same subnetwork as the virtual node in the subnetwork of the currently processed layer may be performed according to the set information of the virtual nodes that belong to the same subnetwork as the virtual node. If there are virtual nodes that belong to a same subnetwork as the virtual node,, step 132 is performed; otherwise, step 133 is performed. For the subnetwork of the very top layer, normally there are not virtual nodes that belong to a same subnetwork as the virtual node in the layer.

Step 132: If there are virtual nodes that belong to a same subnetwork as the virtual node, perform the topology layout of the virtual node according to the topology layout policy corresponding to the virtual node and the information of the nodes that compose the virtual node, or perform the topology layout of the virtual nodes that belong to the same subnetwork as the virtual node according to the topology layout policy corresponding to the virtual nodes that belong to the same subnetwork as the virtual node and the information of the nodes that compose the virtual nodes that belong to the same subnetwork as the virtual node. In other words, one virtual node is selected from the virtual node in the subnetwork of the currently processed layer and the virtual nodes that belong to the same subnetwork as the virtual node to perform the topology layout. In another implementation, the topology layout of both the virtual node and the virtual nodes that belong to the same subnetwork as the virtual node may also be performed.

Step 133: If there are not virtual nodes that belong to a same subnetwork as the virtual node, perform the topology layout of the virtual node according to the obtained topology layout policy corresponding to the virtual node in the subnetwork of the currently processed layer and information of the nodes that compose the virtual node.

It should be understood that, if the virtual node in the subnetwork of the currently processed layer corresponds to a virtual node of a lower layer of a virtual node in a subnetwork of an upper layer, a layout direction of the virtual node in the subnetwork of the upper layer and a layout location of the virtual node in the subnetwork of the upper layer may be adjusted first, and then the topology layout of the virtual node is performed. In other words, the topology layout of the virtual node is performed after the location and direction of the virtual node are adapted. Definitely, the layout location of the virtual node may be set first, then the layout direction of the virtual node is set, and afterwards the topology layout of the virtual node is performed.

Accordingly, before the performing the topology layout of the virtual node (or the virtual nodes that belong to the same subnetwork as the virtual node) according to the obtained topology layout policy corresponding to the virtual node in the subnetwork of the currently processed layer (or the virtual nodes that belong to the same subnetwork as the virtual node) and information of the nodes that compose the virtual node (or the virtual nodes that belong to the same subnetwork as the virtual node) as stated in steps 132 and 133, the method may further include the following steps:

The layout location (and layout direction) of the virtual node (and the virtual nodes that belong to the same subnetwork as the virtual node) in the virtual node of the subnetwork of the upper layer is set. The setting of the layout location of the virtual node (and the virtual nodes that belong to the same subnetwork as the virtual node) in the virtual node of the subnetwork of the upper layer includes the following steps:

Nodes corresponding to the virtual node (and the virtual nodes that belong to the same subnetwork as the virtual node) in the subnetwork of the lower layer of the currently processed layer are determined, and locations of the corresponding nodes in the subnetwork of the lower layer are set as the location of the virtual node (and the virtual nodes that belong to the same subnetwork as the virtual node) in the subnetwork of the upper layer of the currently processed layer respectively.

For example, it is assumed that there is a virtual node A1 and a virtual node A2 that belong to a same subnetwork of a certain layer, and it is determined that a node corresponding to A1 in a subnetwork of a lower layer is A3, and a node corresponding to A2 in the subnetwork of the lower layer is A4. Accordingly, in this step, a location of A3 is set as a location of A1 in the subnetwork of the upper layer, and a location of A4 is set as a location of A2 in the subnetwork of the upper layer. It should be understood that, if there are not virtual nodes that belong to a same subnetwork as the virtual node A1, not only the layout location of the virtual node A1 in the subnetwork of the upper layer is set, but also a layout direction of the virtual node A1 in the subnetwork of the upper layer may be set.

In order to truly reflect the network topology, after the above steps are completed, as shown in FIG. 2, the method according to the first embodiment may further include the following steps:

Step 14: Perform layout adjustment of the network in which the topology layout of each of the virtual nodes is already implemented to obtain a network topology diagram.

In this step, the layout adjustment of the network after the topology layout of the virtual nodes in the network is mainly performed by implementing overlap analysis. When the virtual nodes overlap or intersect, the topology layout between the virtual nodes is adjusted.

The objective of performing the topology layout of the network is that: the network topology diagram close to the actual networking structure is achieved, the connecting lines between all the nodes in the network topology diagram do not intersect, the shortest distance between the nodes satisfies a certain value, and the layout result is exquisite. Therefore, the real purpose of the overlap analysis is to judge whether the connecting lines between the nodes intersect and whether the shortest distance between the nodes satisfies the requirement.

In the above process, because the layout is performed from top to bottom, before the virtual node of the lower layer is laid out, the size of the virtual node of the upper layer is unknown, and space can only be allocated according to the size of a common node. When the layout from top to bottom is completed for the first time, the size of the space of the virtual node of the bottom layer is determined. Layout calculation is performed again from top to bottom according to the determined information, so that the size of the virtual node of the upper layer can be determined. Accordingly, the layout calculation is repeated until the size of the virtual node of the very top layer is determined. In the above topology layout process, each of the virtual nodes is an irregular enclosed area, and when the layout is performed within the virtual node, the key of the adjustment of the whole topology is that "the nodes" do not overlap each other.

It can be seen from the method according to the first embodiment of the present invention that, a grouping process of the complex network is performed, and the topology layout of each of the subnetworks is performed. Therefore, when topology layout of a complex network is performed according to the embodiment of the present invention, compared with the layout method of a single network algorithm in the prior art, the topology of the network can be more truly reflected.

How to perform network topology layout is described below with reference to a second embodiment.

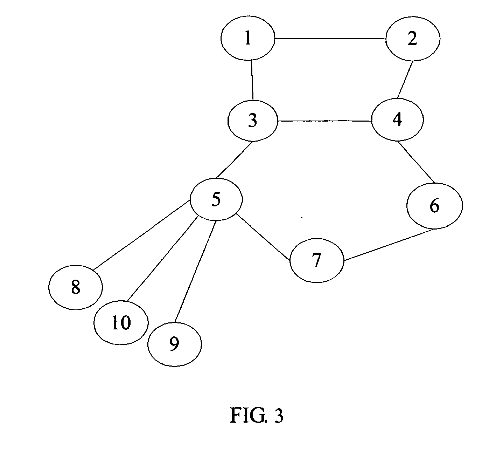

As shown in FIG. 3, assuming that a network consists of 10 nodes. Nodes 1, 2, 3, and 4 form a ring-shaped backbone network, nodes 3, 4, 5, 6, and 7 form a service sub-network, and nodes 5, 8, 9, and 10 form a tree-shaped access network.

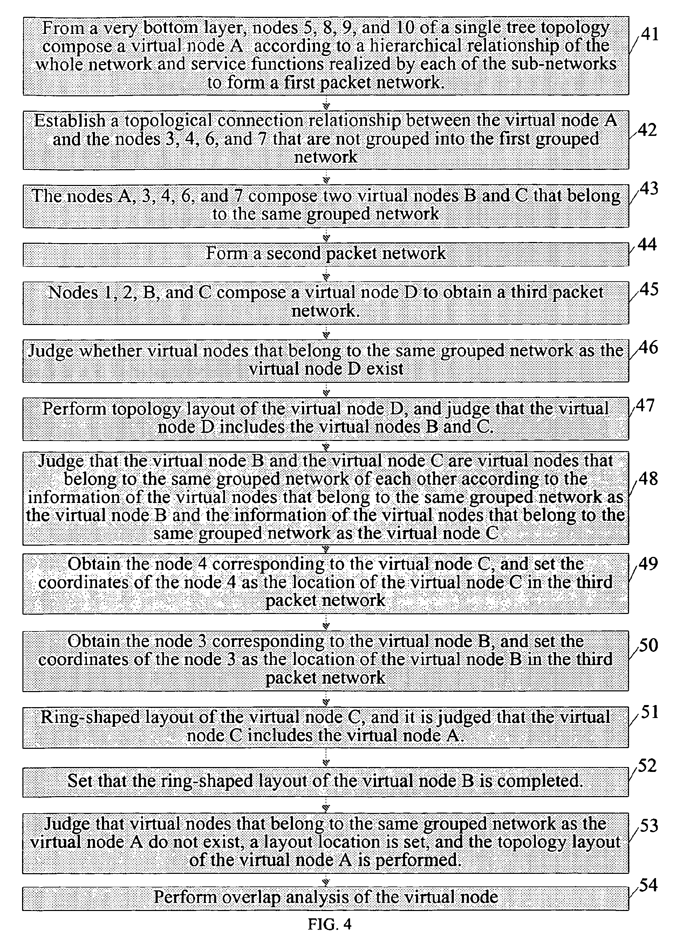

As shown in FIG. 4, the second embodiment of the present invention includes the following steps:

Step 41: From a very bottom layer, compose a virtual node A by the nodes 5, 8, 9, and 10 of the single tree topology according to a hierarchical relationship of the whole network and service functions implemented by each of the sub-networks to form a first subnetwork.

A topology layout policy of the virtual node A is set as a tree topology. Information of virtual nodes that belong to the same subnetwork is set as null. Information of the nodes that compose the virtual node A covers the nodes 5, 8, 9, and 10. Meanwhile, a location of the virtual node A corresponds to a location of the node 5. That is to say, coordinates of the virtual node A are based on coordinates of the node 5.

Step 42: Establish a topological connection relationship between the virtual node A and the nodes 3, 4, 6, and 7 that are not grouped into the first subnetwork.

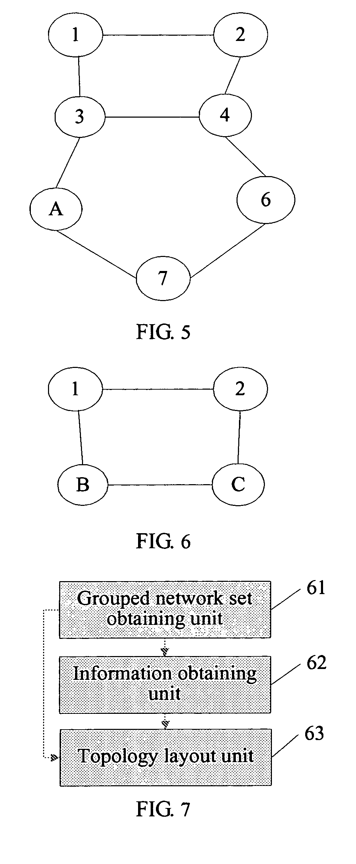

Because a topological connection relationship between the node 5 and the non-grouped nodes 3, 4, 6, and 7 is the ring topology, in order to truly reflect the whole network structure, the topological connection relationship between the virtual node A and the non-grouped nodes 3, 4, 6, and 7 is also the ring topology, as shown in FIG. 5.

Step 43: Based on the network topology shown in FIG. 5, the nodes A, 3, 4, 6, and 7 compose two virtual nodes B and C that belong to the same subnetwork. Both of the virtual nodes B and C that belong to the same subnetwork include the nodes A, 3, 4, 6, and 7.

The reason to set the two virtual nodes B and C that belong to the same subnetwork is that both the nodes 3 and 4 belong to a backbone ring 1-2-3-4-1. If the nodes A, 3, 4, 6, and 7 only compose a virtual node B1, the backbone ring, originally consisting of four nodes, is now formed by the three nodes B1, 1, and 2, so that the network structure is distorted, and in the backbone ring, the topological relationship of 1-3 turns to 1-B1, 2-4 turns to 2-B1, and the relationship of the nodes 3-4 is lost. If the nodes A, 3, 4, 6, and 7 compose three virtual nodes B2, B3, and B4, the backbone ring, originally consisting of four nodes, is now formed by the five nodes B2, B3, B4, 1, and 2, so that the network structure is also distorted, and in the backbone ring, the topological relationship of 1-3 turns to 1-B2, 2-4 turns to 2-B4, and 3-4 turns to B2-B4, but no topological connection relationship exists between the virtual node B3 and any node.

Step 44: Set the topology layout policy of the virtual nodes B and C as the ring topology. It is set that coordinates of the virtual node B are based on those of the node 3, and coordinates of the virtual node C are based on those of the node 4. A topological connection relationship between the node 1 and the virtual node B, and a topological connection relationship between the node 2 and the virtual node C are established. A topological connection between B and C is established according to topological connection between the nodes 3 and 4 corresponding to the virtual nodes B and C. Therefore, a second subnetwork as shown in FIG. 6 is formed. Meanwhile, information of virtual nodes that belong to the same subnetwork as the virtual node B is that the virtual node B and the virtual node C are the virtual nodes that belong to the same subnetwork of each other, while information of virtual nodes that belong to the same subnetwork as the virtual node C is that the virtual node C and the virtual node B are the virtual nodes that belong to the same subnetwork of each other.

Step 45: Nodes 1, 2, B, and C compose an ultimate virtual node D to form a third subnetwork. Information of the virtual nodes that belong to the same subnetwork as the virtual node D is null, and a topology layout policy of the virtual node D is the ring topology.

Step 46: Perform the topology layout from the very top layer of a hierarchical subnetwork set (the third subnetwork, the second subnetwork, and the first subnetwork), that is to say, from the third subnetwork, which equals starting from the virtual node D. Firstly, it is judged whether virtual nodes that belong to the same subnetwork as the virtual node D exist. If virtual nodes that belong to the same subnetwork as the virtual node D exist, perform step 47. As described in the embodiment of the present invention, there are not virtual nodes that belong to the same subnetwork as the virtual node D.

Step 47: Perform the topology layout of the virtual node D according to the topology layout policy of the virtual node D and the information of the nodes that compose the virtual node D, and judge that the virtual node D includes the virtual node B and the virtual node C.

Step 48: Judge that the virtual node B and the virtual node C are virtual nodes that belong to the same subnetwork of each other according to the information of the virtual nodes that belong to the same subnetwork as the virtual node B and the information of the virtual nodes that belong to the same subnetwork as the virtual node C set in Step 44.

Step 49: Obtain the node 4 corresponding to the virtual node C, and set the coordinates of the node 4 as the location of the virtual node C in the third subnetwork.

Step 50: Obtain the node 3 corresponding to the virtual node B, and set the coordinates of the node 3 as the location of the virtual node B in the third subnetwork.

Step 51: Perform ring-shaped layout of the virtual node C according to the topology layout policy of the virtual node C and the information of the nodes that compose the virtual node C, and judge that the virtual node C includes the virtual node A.

Step 52: Complete the setting of the ring-shaped layout of the virtual node B. It should be understood that, because the virtual node B and the virtual node C are the virtual nodes that belong to the same subnetwork of each other, in the embodiment of the present invention, the ring-shaped layout of the virtual node C, but not of the virtual node B is selectively performed. In another implementation, the ring-shaped layout of the virtual node B, but not of the virtual node C may also be selectively performed.

Step 53: According to step 51 in which it is judged that the virtual node C includes the virtual node A and Judge that virtual nodes that belong to the same subnetwork as the virtual node A do not exist according to the information of the virtual nodes that belong to the same subnetwork as the node A set in step 41.

The node 5 corresponding to the virtual node A is obtained, the location of the node is set as the location of the virtual node A in the second subnetwork, a layout direction of the virtual node A in the virtual node C is adjusted, and the tree topology layout of the virtual node A is performed according to the topology layout policy of the virtual node A and the information of the nodes that compose the virtual node A.

Step 54: In order to further guarantee the accuracy of the network topology layout of a complex network, after each of the above subnetworks is laid out, perform overlap analysis of the virtual nodes. When the virtual nodes overlap or intersect, adjust layout parameters of the virtual nodes A, B, C, and D.

In view of the above embodiments, in the method of the present invention, a grouping process of the complex network is performed, and the topology layout of each of the subnetworks is performed. Therefore, when the topology layout of the complex network is performed by using the method according to the embodiments of the present invention, compared with the layout method of a single network algorithm in the prior art, the topology of the network can be more truly reflected.

Persons of ordinary skill in the art should understand that all or a part of the steps of the method according to the embodiments of the present invention may be implemented by a computer program instructing relevant hardware. The program may be stored in a computer readable storage medium. When the program is run, the steps of the method according to the embodiments of the present invention are performed. The storage medium may be a magnetic disk, an optical disk, a Read-Only Memory (ROM), or a Random Access Memory (RAM).

Corresponding to the method according to the embodiments of the present invention, a network topology layout device is further provided in a third embodiment of the present invention.

As shown in FIG. 7, the network topology layout device provided in the third embodiment of the present invention includes: a subnetwork set obtaining unit 61, an information obtaining unit 62, and a topology layout unit 63.

The set of subnetworks obtaining unit 61 is configured to obtain a set of subnetworks, in which there is a hierarchical relationship between the subnetworks, a subnetwork of the top layer consists of one virtual node, a subnetwork of a non-bottom layer comprises at least one virtual node, and the virtual node comprises at least one node or at least one virtual node of a lower layer.

The information obtaining unit 62 is configured to obtain a topology layout policy corresponding to a virtual node in a subnetwork of each layer in the set of subnetworks and information of nodes that compose the virtual node.

The topology layout unit 63 is configured to perform topology layout of the virtual node according to the hierarchical relationship between the subnetworks, and the obtained topology layout policy of the virtual node and information of the nodes that compose the virtual node.

In addition, if the subnetwork of the currently processed layer is the subnetwork of the non-bottom layer, the information obtaining unit 62 is further configured to obtain information of virtual nodes that belong to the same subnetwork as the virtual node.

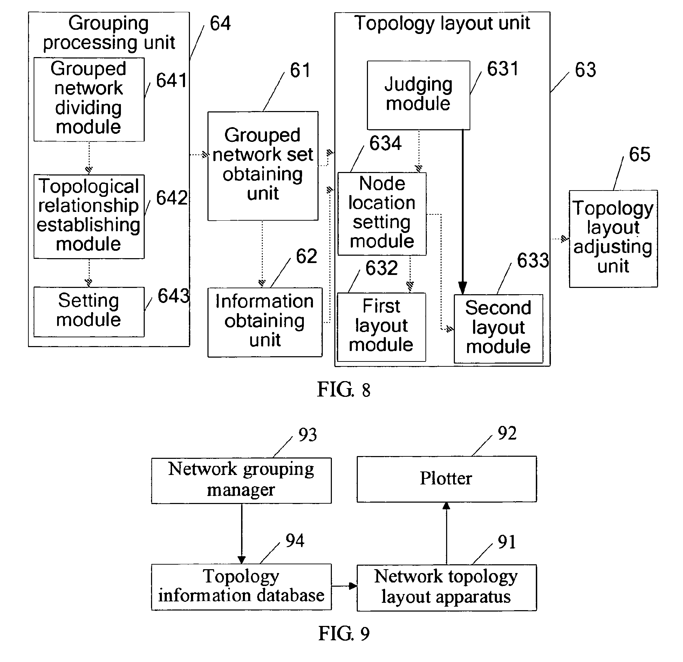

In order to further guarantee the accuracy of the network topology layout of a complex network, as shown in FIG. 8, the network topology layout device further includes a grouping processing unit 64. The grouping processing unit 64 is configured to group nodes that have a single network topology in a network, and includes a subnetwork dividing module 641, a topological relationship establishing module 642, and a setting module 643.

The subnetwork dividing module 641 is configured to compose, by nodes that have the single network topology in a currently processed layer, one or more virtual nodes to obtain a subnetwork of the currently processed layer. A location of each of the virtual nodes corresponds to a location of one node of the nodes that have the single network topology

The topological relationship establishing module 642 is configured to establish a topological connection relationship between the virtual node and the nodes that are not grouped into the subnetwork of the currently processed layer, to obtain a subnetwork of an upper layer.

The setting module 643 is configured to set the topology layout policy of the virtual node in the subnetwork of the currently processed layer and the information of the nodes that compose the virtual node.

As shown in FIG. 8, the topology layout unit 63 includes a judging module 631, a first layout module 632, and a second layout module 633. The judging module 631 is configured to determine, from the subnetwork of the top layer in the set of subnetworks, whether there are virtual nodes that belong to a same subnetwork as the virtual node in the subnetwork of the currently processed layer. The first layout module 632 is perform the topology layout of the virtual node according to the topology layout policy corresponding to the virtual node and the information of the nodes that compose the virtual node; or, perform the topology layout of virtual nodes that belong to a same subnetwork as the virtual node according to the topology layout policy corresponding to the virtual nodes that belong to a same subnetwork as the virtual node and the information of the nodes that compose the virtual nodes that belong to a same subnetwork as the virtual node if there are virtual nodes that belong to a same subnetwork as the virtual node. The second layout module 633 is configured to perform the topology layout of the virtual node according to the topology layout policy corresponding to the virtual node and the information of the nodes that compose the virtual node if there are not virtual nodes that belong to a same subnetwork as the virtual node.

In addition, when the virtual node exists, the topology layout unit 63 may further include a node location setting module 634, configured to set layout locations of the virtual node and the virtual nodes that belong to the same subnetwork as the virtual node in a virtual node of a subnetwork of an upper layer. Specifically, the node location setting module 634 determines nodes corresponding to the virtual node and the virtual nodes that belong to the same subnetwork as the virtual node in a subnetwork of a lower layer of the currently processed layer respectively, and sets locations of the corresponding nodes in the subnetwork of the lower layer as the locations of the virtual node and the virtual nodes that belong to the same subnetwork as the virtual node in the subnetwork of the upper layer of the currently processed layer. Alternatively, the node location setting module 634 is configured to set the layout location of the virtual node in the virtual node of the subnetwork of the upper layer. Specifically, the node location setting module 634 determines a node corresponding to the virtual node in the subnetwork of the lower layer of the currently processed layer, and sets a location of the corresponding node in the subnetwork of the lower layer as the location of the virtual node in the virtual node of the subnetwork of the upper layer of the currently processed layer. It should be understood that, the node location setting module 634 may also set a layout direction of the virtual node in the subnetwork of the upper layer of the currently processed layer.

In order to further guarantee the accuracy of the network topology layout of a complex network, the topology layout device in the third embodiment of the present invention further includes a topology layout adjusting unit 65, configured to adjust the layout of the network in which the topology layout of each of the virtual nodes is already implemented, so that a network topology diagram is obtained.

In view of the above, in the topology layout device according to the third embodiment of the present invention, a grouping process of the complex network is performed, and the topology layout of each of the subnetworks is performed. Therefore, when the topology layout of the complex network is performed according to the embodiments of the present invention, compared with the layout method of a single network algorithm in the prior art, the topology of the network can be more truly reflected.

As shown in FIG. 9, a topology layout system according to a fourth embodiment of the present invention may include: a network topology layout apparatus 91 and a plotter 92. The network topology layout apparatus 91 is configured to obtain a set of subnetworks, wherein there is a hierarchical relationship between the subnetworks, a subnetwork of the top layer consists of one virtual node, a subnetwork of a non-bottom layer comprises at least one virtual node, and the virtual node comprises at least one node or at least one virtual node of a lower layer; and perform topology layout of a virtual node according to the hierarchical relationship between the subnetworks, and an obtained topology layout policy corresponding to a virtual node in a subnetwork of each layer in the set of subnetworks and information of nodes that compose the virtual node. The plotter 92 is configured to draw a corresponding network topology diagram according to a topology layout result of the network topology layout apparatus 91.

In addition, in order to increase efficiency of the topology layout, the system may further include a network grouping manager 93 and a topology information database 94.

The network grouping manager 93 is configured to group nodes that have a single network topology in a network to obtain the set of subnetworks.

The topology information database 94 is configured to store grouping information of the set of subnetworks. The grouping information includes the topology layout policy of the virtual node in the subnetwork of each layer and the information of the nodes that compose the virtual node.

In addition, the topology information database 94 is further configured to store information of virtual nodes that belong to the same subnetwork as the virtual node.

In view of the above, in the topology layout method, device, and system according to the embodiments of the present invention, a grouping process of the complex network is performed, that is to say, the whole network is divided into multiple subnetworks, and each of the subnetworks is of a single network topology. A single-mode layout method is employed to perform the topology layout of each of the subnetworks in sequence, and eventually the layout of the whole network is completed. Therefore, when the method according to the embodiments of the present invention is adopted to perform the topology layout of the complex network, compared with the layout method of a single network algorithm in the prior art, the network topology can be more truly reflected, so as to solve the problem that currently the topology layout of a complex network structure cannot be fully simulated, thus achieving a network topology diagram close to the actual networking structure.

Furthermore, according to the embodiments of the present invention, the grouping process of the nodes of the network is performed, and the single-mode layout method is employed to perform the topology layout of each of the subnetworks in sequence, so that the topology layout of the complex network structure is achieved, and the difficulty of the network topology layout is decreased.

The solutions of the embodiments of the present invention are applicable to systems related to topology management concerning network designing, network planning, network management, and network maintenance in the field of telecommunications.

The above descriptions are merely specific embodiments of the present invention, but not intended to limit the present invention.

## Claims

1. A network topology layout method, comprising:
obtaining (11) a set of subnetworks, wherein there is a hierarchical relationship between the subnetworks, a subnetwork of the top layer consists of one virtual node, a subnetwork of a non-bottom layer comprises at least one virtual node, and the virtual node comprises at least one node or at least one virtual node of a lower layer, wherein the virtual node is composed by the nodes that have the single network topology in the corresponding layer, and the subnetwork of the non-bottom layer represents the subnetwork of each layer except the subnetwork of the very top layer and the subnetwork of the very bottom layer;
obtaining (12) a topology layout policy corresponding to a virtual node in a subnetwork of each layer in the set of subnetworks and information of nodes that compose the virtual node, wherein the topology layout policy indicates the type of the network topology of the nodes that compose the virtual node; and
performing (13) topology layout of the virtual node from top to bottom shown in the hierarchical relationship between the subnetworks, and the obtained topology layout policy of the virtual node and information of the nodes that compose the virtual node, wherein before the obtaining (11) the hierarchical subnetwork set, the method further comprises:
grouping nodes that have a single network topology in a network,
wherein the grouping nodes of a single network topology in the network comprises:
from the bottom layer of the network, composing, by nodes (5, 8, 9, 10) that have the single network topology in a currently processed layer, one or more virtual nodes to obtain a subnetwork of the currently processed layer, **characterized in that** a location of each of the virtual nodes corresponds to a location of one node of the nodes that have the single network topology;
establishing a topological connection relationship between the virtual node (A) and the nodes (3, 4, 6, 7) that are not grouped into the subnetwork of the currently processed layer, to obtain a subnetwork of an upper layer, wherein the subnetwork of the upper layer has a single network topology; and
setting a topology layout policy of the virtual node in the subnetwork of the currently processed layer and information of the nodes that compose the virtual node.

2. The network topology layout method according to claim 1, wherein, if the nodes that have a single network topology in a currently processed layer compose multiple virtual nodes, the virtual nodes belong to a same subnetwork, the nodes that compose each of the virtual nodes that belong to the same subnetwork are the same, and the grouping nodes that have a single network topology in a network further comprises:
establishing a topological connection relationship between the virtual nodes that belong to the same subnetwork according to a topological connection relationship between nodes corresponding to locations of the virtual nodes.

3. The network topology layout method according to claim 1, wherein the establishing a topological connection relationship between the virtual node (A) and the nodes (3, 4, 6, 7) that are not grouped into the subnetwork of the currently processed layer comprises:
establishing the topological connection relationship between the virtual node (A) and the nodes (3, 4, 6, 7) that are not grouped into the subnetwork of the currently processed layer according to a topological connection relationship between each node (5, 8, 9, 10) in the subnetwork of the currently processed layer and the nodes (3, 4, 6, 7) that are not grouped into the subnetwork of the currently processed layer.

4. The network topology layout method according to claim 1, wherein if the subnetwork of the currently processed layer is a subnetwork of a non-bottom layer, the obtaining the topology layout policy corresponding to the virtual node in the subnetwork of each layer and information of nodes that compose the virtual node further comprises:
obtaining information of virtual nodes that belong to the same subnetwork as the virtual node.

5. The network topology layout method according to claim 4, wherein the performing topology layout of the virtual node according to a hierarchical relationship between the subnetworks, and the obtained topology layout policy of the virtual node and information of the nodes that compose the virtual node comprises:
from the subnetwork of the top layer in the set of subnetworks, determining, whether there are virtual nodes that belong to a same subnetwork as the virtual node in the subnetwork of the currently processed layer;
if there are virtual nodes that belong to a same subnetwork as the virtual node, performing the topology layout of the virtual node according to the topology layout policy corresponding to the virtual node and the information of the nodes that compose the virtual node; or, performing the topology layout of virtual nodes that belong to a same subnetwork as the virtual node according to the topology layout policy corresponding to the virtual nodes that belong to a same subnetwork as the virtual node and the information of the nodes that compose the virtual nodes that belong to a same subnetwork as the virtual node;
if there are not virtual nodes that belong to a same subnetwork as the virtual node, performing the topology layout of the virtual node according to the topology layout policy corresponding to the virtual node and the information of the nodes that compose the virtual node.

6. The network topology layout method according to claim 5, wherein if the virtual node in the subnetwork of the currently processed layer corresponds to a virtual node of a lower layer of a virtual node in the subnetwork of the upper layer, before the performing the topology layout of the virtual node according to the topology layout policy corresponding to the virtual node and the information of the nodes that compose the virtual node; or, performing the topology layout of virtual nodes that belong to a same subnetwork as the virtual node according to the topology layout policy corresponding to the virtual nodes that belong to a same subnetwork as the virtual node and the information of the nodes that compose the virtual nodes that belong to a same subnetwork as the virtual node, the method further comprises:
setting layout locations of the virtual node and the virtual nodes that belong to a same subnetwork as the virtual node in the virtual node of the subnetwork of the upper layer; or
if the virtual node in the subnetwork of the currently processed layer corresponds to a virtual node of a lower layer of a virtual node in the subnetwork of the upper layer, before the performing the topology layout of the virtual node according to the topology layout policy corresponding to the virtual node and the information of the nodes that compose the virtual node, the method further comprises: setting a layout location and a layout direction of the virtual node in the virtual node of the subnetwork of the upper layer.

7. The network topology layout method according to claim 6, wherein the setting the layout locations of the virtual node and the virtual nodes that belong to a same subnetwork as the virtual node in the virtual node of the subnetwork of the upper layer comprises:
determining nodes corresponding to the virtual node and the virtual nodes that belong to the same subnetwork as the virtual node in a subnetwork of a lower layer of the currently processed layer respectively, and respectively setting locations of the corresponding nodes in the subnetwork of the lower layer as the locations of the virtual node and the virtual nodes that belong to the same subnetwork as the virtual node in the virtual nodes of the subnetwork of the upper layer of the currently processed layer; or
the setting the layout location and the layout direction of the virtual node in the virtual node of the subnetwork of the upper layer comprises:
determining a node corresponding to the virtual node in the subnetwork of the lower layer of the currently processed layer; setting a location of the node in the subnetwork of the lower layer as the location of the virtual node in the virtual node of the subnetwork of the upper layer of the currently processed layer; and setting the layout direction of the virtual node in the virtual node of the subnetwork of the upper layer of the currently processed layer.

8. The network topology layout method according to any one of claims 1 to 7, further comprising:
performing layout adjustment of the network in which the topology layout of each of the virtual nodes is already implemented to obtain a network topology diagram.

9. The network topology layout method according to claim 8, wherein the performing the layout adjustment of the network in which the topology layout of each of the virtual nodes is already implemented comprises:
performing overlap analysis of the virtual nodes in the network, and adjusting the topology layout of the virtual nodes when the virtual nodes overlap or intersect.

10. A network topology layout device, comprising:
a subnetwork set obtaining unit (61), configured to obtain a set of subnetworks, wherein there is a hierarchical relationship between the subnetworks, a subnetwork of the top layer consists of one virtual node, a subnetwork of a non-bottom layer comprises at least one virtual node, and the virtual node comprises at least one node or at least one virtual node of a lower layer, wherein the virtual node is composed by the nodes that have the single network topology in the corresponding layer, and the subnetwork of the non-bottom layer represents the subnetwork of each layer except the subnetwork of the very top layer and the subnetwork of the very bottom layer;
an information obtaining unit (62), configured to obtain a topology layout policy corresponding to a virtual node in a subnetwork of each layer in the set of subnetworks and information of nodes that compose the virtual node, wherein the topology layout policy indicates the type of the network topology of the nodes that compose the virtual node; and
a topology layout unit (63), configured to perform topology layout of the virtual node from top to bottom shown in the hierarchical relationship between the subnetworks, and the obtained topology layout policy of the virtual node and information of the nodes that compose the virtual node;
a grouping processing unit (64), configured to group nodes that have a single network topology in a network, wherein the grouping processing unit (64) comprises:
a subnetwork dividing module (641), configured to from the bottom layer of the network, compose, by nodes (5, 8, 9, 10) that have the single network topology in a currently processed layer, one or more virtual nodes to obtain a subnetwork of the currently processed layer, **characterized in that** a location of each of the virtual nodes corresponds to a location of one node of the nodes that have the single network topology;
a topological relationship establishing module (642), configured to establish a topological connection relationship between the virtual node (A) and the nodes (3, 4, 6, 7) that are not grouped into the subnetwork of the currently processed layer, to obtain a subnetwork of an upper layer, wherein the subnetwork of the upper layer has a single network topology; and
a setting module (643), configured to set the topology layout policy of the virtual node in the subnetwork of the currently processed layer and the information of the nodes that compose the virtual node.

11. The topology layout device according to claim 10, wherein if the subnetwork of the currently processed layer is a subnetwork of a non-bottom layer, the information obtaining unit (62) is further configured to obtain information of virtual nodes that belong to the same subnetwork as the virtual node.

12. The topology layout device according to claim 11, wherein the topology layout unit (63) comprises:
a judging module (631), configured to determine, from the subnetwork of the top layer in the set of subnetworks, whether there are virtual nodes that belong to a same subnetwork as the virtual node in the subnetwork of the currently processed layer;
a first layout module (632), configured to perform the topology layout of the virtual node according to the topology layout policy corresponding to the virtual node and the information of the nodes that compose the virtual node; or, perform the topology layout of virtual nodes that belong to a same subnetwork as the virtual node according to the topology layout policy corresponding to the virtual nodes that belong to a same subnetwork as the virtual node and the information of the nodes that compose the virtual nodes that belong to a same subnetwork as the virtual node if there are virtual nodes that belong to a same subnetwork as the virtual node; and
a second layout module (633), configured to perform the topology layout of the virtual node according to the topology layout policy corresponding to the virtual node and the information of the nodes that compose the virtual node if there are not virtual nodes that belong to a same subnetwork as the virtual node.

13. The topology layout device according to claim 12, wherein the topology layout unit (63) further comprises:
a node location setting module (634), configured to set layout locations of the virtual node and the virtual nodes that belong to a same subnetwork as the virtual node in the virtual node of the subnetwork of the upper layer, or set a layout location of the virtual node in the virtual node of the subnetwork of the upper layer.

14. The network topology layout device according to any one of claims 10 to 13, further comprising:
a layout adjusting unit (65), configured to adjust the layout of the network in which the topology layout of each of the virtual nodes is already implemented to obtain a network topology diagram.

15. A network topology system, **characterized by** comprising:
the network topology layout apparatus according to any one of claims 10 to 14; and a plotter (92), configured to draw a network topology diagram according to a topology layout result of the network topology layout apparatus (91).

16. A computer program product, **characterized by** comprising computer program code, which will cause the computer unit to perform the method according to any one of claims 1 to 10, when executed by a computer unit.

## Patentansprüche

1. Netztopologie-Aufbauverfahren, das Folgendes umfasst:
Erhalten (11) einer Menge von Teilnetzen, wobei es eine hierarchische Beziehung zwischen den Teilnetzen gibt, ein Teilnetz der oberen Schicht aus einem virtuellen Knoten besteht, ein Teilnetz einer nicht unteren Schicht wenigstens einen virtuellen Knoten umfasst und der virtuelle Knoten wenigstens einen Knoten oder wenigstens einen virtuellen Knoten einer tieferen Schicht umfasst, wobei der virtuelle Knoten durch die Knoten gebildet ist, die eine einzelne Netztopologie in der entsprechenden Schicht besitzen, und das Teilnetz der nicht unteren Schicht das Teilnetz jeder Schicht mit Ausnahme des Teilnetzes der obersten Schicht und des Teilnetzes der untersten Schicht repräsentiert;
Erhalten (12) einer Topologieaufbaustrategie, die einem virtuellen Knoten in einem Teilnetz jeder Schicht in der Menge von Teilnetzen entspricht, und der Informationen über die Knoten, die den virtuellen Knoten bilden, wobei die Topologieaufbaustrategie den Typ der Netztopologie der Knoten angibt, die den virtuellen Knoten bilden; und
Ausführen (13) des Topologieaufbaus des virtuellen Knotens von oben nach unten,
der in der hierarchischen Beziehung zwischen den Teilnetzen und der erhaltenen Topologieaufbaustrategie des virtuellen Knotens und den erhaltenen Informationen über die Knoten, die den virtuellen Knoten bilden, gezeigt ist, wobei das Verfahren vor dem Erhalten (11) der Menge der hierarchischen Teilnetze ferner Folgendes umfasst:
Gruppieren der Knoten, die eine einzelne Netztopologie besitzen, in einem Netz,
wobei das Gruppieren der Knoten einer einzelnen Netztopologie in dem Netz Folgendes umfasst:
von der unteren Schicht des Netzes Bilden durch die Knoten (5, 8, 9, 10), die die einzelne Netztopologie in einer momentan verarbeiteten Schicht besitzen, eines oder
mehrerer virtueller Knoten, um ein Teilnetz der momentan verarbeiteten Schicht zu erhalten, **dadurch gekennzeichnet, dass** ein Ort jedes der virtuellen Knoten einem Ort von einem Knoten der Knoten, die eine einzelne Netztopologie besitzen, entspricht;
Aufbauen einer topologischen Verbindungsbeziehung zwischen dem virtuellen Knoten (A) und den Knoten (3, 4, 6, 7), die in dem Teilnetz der momentan verarbeiteten Schicht nicht gruppiert werden, um ein Teilnetz einer oberen Schicht zu erhalten, wobei das Teilnetz der oberen Schicht eine einzelne Netztopologie besitzt;
und
Setzen einer Topologieaufbaustrategie des virtuellen Knotens in dem Teilnetz der momentan verarbeiteten Schicht und der Informationen über die Knoten, die den virtuellen Knoten bilden.

2. Netztopologie-Aufbauverfahren nach Anspruch 1, wobei, falls die Knoten, die eine einzelne Netztopologie in einer momentan verarbeiteten Schicht besitzen, mehrere virtuelle Knoten bilden, die virtuellen Knoten zum selben Teilnetz gehören, die Knoten, die jeden der virtuellen Knoten bilden, die zu demselben Teilnetz gehören, dieselben sind und das Gruppieren der Knoten, die eine einzelne Netztopologie in einem Netz besitzen, ferner Folgendes umfasst:
Aufbauen einer topologischen Verbindungsbeziehung zwischen den virtuellen Knoten, die zu demselben Teilnetz gehören, in Übereinstimmung mit einer topologischen Verbindungsbeziehung zwischen den Knoten, die den Orten der virtuellen Knoten entsprechen.

3. Netztopologie-Aufbauverfahren nach Anspruch 1, wobei das Aufbauen einer topologischen Verbindungsbeziehung zwischen dem virtuellen Knoten (A) und den Knoten (3, 4, 6, 7), die in dem Teilnetz der momentan verarbeiteten Schicht nicht gruppiert werden, Folgendes umfasst:
Aufbauen der topologischen Verbindungsbeziehung zwischen dem virtuellen Knoten (A) und den Knoten (3, 4, 6, 7), die in dem Teilnetz der momentan verarbeiteten Schicht nicht gruppiert werden, in Übereinstimmung mit einer topologischen Verbindungsbeziehung zwischen jedem Knoten (5, 8, 9, 10) in dem Teilnetz der momentan verarbeiteten Schicht und den Knoten (3, 4, 6, 7), die in dem Teilnetz der momentan verarbeiteten Schicht nicht gruppiert werden.

4. Netztopologie-Aufbauverfahren nach Anspruch 1, wobei, falls das Teilnetz der momentan verarbeiteten Schicht ein Teilnetz einer nicht unteren Schicht ist, das Erhalten der Topologieaufbaustrategie, die dem virtuellen Knoten in dem Teilnetz jeder Schicht entspricht, und der Informationen über die Knoten, die den virtuellen Knoten bilden, ferner Folgendes umfasst:
Erhalten der Informationen über die virtuellen Knoten, die zu demselben Teilnetz wie der virtuelle Knoten gehören.

5. Netztopologie-Aufbauverfahren nach Anspruch 4, wobei das Ausführen des Topologieaufbaus des virtuellen Knotens in Übereinstimmung mit einer hierarchischen Beziehung zwischen den Teilnetzen und der erhaltenen Topologieaufbaustrategie des virtuellen Knotens und den erhaltenen Informationen über die Knoten, die den virtuellen Knoten bilden, Folgendes umfasst:
von dem Teilnetz der oberen Schicht in der Menge der Teilnetze Bestimmen, ob es virtuelle Knoten, die zu demselben Teilnetz wie der virtuelle Knoten gehören, in dem Teilnetz der momentan verarbeiteten Schicht gibt;
falls es virtuelle Knoten gibt, die zu demselben Teilnetz wie der virtuelle Knoten gehören, Ausführen des Topologieaufbaus des virtuellen Knotens in Übereinstimmung mit der Topologieaufbaustrategie, die dem virtuellen Knoten entspricht, und den Informationen über die Knoten, die den virtuellen Knoten bilden;
oder Ausführen des Topologieaufbaus der virtuellen Knoten, die zu demselben Teilnetz wie der virtuelle Knoten gehören, in Übereinstimmung mit der Topologieaufbaustrategie, die den virtuellen Knoten entspricht, die zu demselben Teilnetz wie der virtuelle Knoten gehören, und den Informationen über die Knoten,
die die virtuellen Knoten bilden, die zum selben Teilnetz wie der virtuelle Knoten gehören;
falls es keine virtuellen Knoten gibt, die zu demselben Teilnetz wie der virtuelle Knoten gehören, Ausführen des Topologieaufbaus des virtuellen Knotens in Übereinstimmung mit der Topologieaufbaustrategie, die dem virtuellen Knoten entspricht, und den Informationen über die Knoten, die den virtuellen Knoten bilden.

6. Netztopologie-Aufbauverfahren nach Anspruch 5, wobei, falls der virtuelle Knoten in dem Teilnetz der momentan verarbeiteten Schicht einem virtuellen Knoten einer tieferen Schicht eines virtuellen Knotens in dem Teilnetz der oberen Schicht entspricht, das Verfahren vor dem Ausführen des Topologieaufbaus des virtuellen Knotens in Übereinstimmung mit der Topologieaufbaustrategie, die dem virtuellen Knoten entspricht, und den Informationen über die Knoten, die den virtuellen Knoten bilden; oder dem Ausführen des Topologieaufbaus der virtuellen Knoten, die zu demselben Teilnetz wie der virtuelle Knoten gehören, in Übereinstimmung mit der Topologieaufbaustrategie, die den virtuellen Knoten entspricht, die zu demselben Teilnetz wie der virtuelle Knoten gehören, und den Informationen über die Knoten, die die virtuellen Knoten bilden, die zu demselben Teilnetz wie der virtuelle Knoten gehören, ferner Folgendes umfasst:
Setzen der Aufbauorte des virtuellen Knotens und der virtuellen Knoten, die zu demselben Teilnetz wie der virtuelle Knoten gehören, in dem virtuellen Knoten des ilnetzes der oberen Schicht; oder
falls der virtuelle Knoten des Teilnetzes der momentan verarbeiteten Schicht einem virtuellen Knoten einer tieferen Schicht eines virtuellen Knotens in dem Teilnetz der oberen Schicht entspricht, das Verfahren vor dem Ausführen des Topologieaufbaus des virtuellen Knotens in Übereinstimmung mit der Topologieaufbaustrategie, die dem virtuellen Knoten entspricht, und den Informationen über die Knoten, die den virtuellen Knoten bilden, ferner Folgendes umfasst: Setzen eines Aufbauortes und einer Aufbaurichtung des virtuellen Knotens in dem virtuellen Knoten des Teilnetzes der oberen Schicht.

7. Netztopologie-Aufbauverfahren nach Anspruch 6, wobei das Setzen der Aufbauorte des virtuellen Knotens und der virtuellen Knoten, die zu demselben Teilnetz wie der virtuelle Knoten gehören, in dem virtuellen Knoten des Teilnetzes der oberen Schicht Folgendes umfasst:
Bestimmen der Knoten, die dem virtuellen Knoten entsprechen, bzw. der virtuellen Knoten, die zu demselben Teilnetz wie der virtuelle Knoten gehören, in einem Teilnetz einer tieferen Schicht der momentan verarbeiteten Schicht und jeweils Setzen der Orte der entsprechenden Knoten in dem Teilnetz der tieferen Schicht als die Orte des virtuellen Knotens und der virtuellen Knoten, die zu demselben Teilnetz wie der virtuelle Knoten gehören, in den virtuellen Knoten des Teilnetzes der oberen Schicht der momentan verarbeiteten Schicht; oder
das Setzen des Aufbauortes und der Aufbaurichtung des virtuellen Knotens in dem virtuellen Knoten des Teilnetzes der oberen Schicht Folgendes umfasst:
Bestimmen eines Knotens, der dem virtuellen Knoten in dem Teilnetz der tieferen Schicht der momentan verarbeiteten Schicht entspricht; Setzen eines Ortes des Knotens in dem Teilnetz der tieferen Schicht als den Ort des virtuellen Knotens in dem virtuellen Knoten des Teilnetzes der oberen Schicht der momentan verarbeiteten Schicht; und Setzen der Aufbaurichtung des virtuellen Knotens in dem virtuellen Knoten des Teilnetzes der oberen Schicht der momentan verarbeiteten Schicht.

8. Netztopologie-Aufbauverfahren nach einem der Ansprüche 1 bis 7, das ferner Folgendes umfasst:
Ausführen einer Aufbaueinstellung des Netzes, in dem der Topologieaufbau jedes der virtuellen Knoten bereits implementiert ist, um eine graphische Darstellung der Netztopologie zu erhalten.

9. Netztopologie-Aufbauverfahren nach Anspruch 8, wobei das Ausführen der Aufbaueinstellung des Netzes, in dem der Topologieaufbau jedes der virtuellen Knoten bereits implementiert ist, Folgendes umfasst:
Ausführen einer Überlappungsanalyse der virtuellen Knoten in dem Netz und
Einstellen des Topologieaufbaus der virtuellen Knoten, wenn sich die virtuellen Knoten überlappen oder schneiden.

10. Netztopologie-Aufbauvorrichtung, die Folgendes umfasst:
eine Teilnetzmengen-Erhalteeinheit (61), die konfiguriert ist, eine Menge von Teilnetzen zu erhalten, wobei es eine hierarchische Beziehung zwischen den Teilnetzen gibt, ein Teilnetz der oberen Schicht aus einem virtuellen Knoten besteht,
ein Teilnetz einer nicht unteren Schicht wenigstens einen virtuellen Knoten umfasst und der virtuelle Knoten wenigstens einen Knoten oder wenigstens einen virtuellen Knoten einer tieferen Schicht umfasst, wobei der virtuelle Knoten durch die Knoten gebildet ist, die eine einzelne Netztopologie in der entsprechenden Schicht besitzen,
und das Teilnetz der nicht unteren Schicht das Teilnetz jeder Schicht mit Ausnahme des Teilnetzes der obersten Schicht und des Teilnetzes der untersten Schicht repräsentiert;
eine Informationserhalteeinheit (62), die konfiguriert ist, eine Topologieaufbaustrategie, die einem virtuellen Knoten in einem Teilnetz jeder Schicht in der Menge von Teilnetzen entspricht, und die Informationen über die Knoten, die den virtuellen Knoten bilden, zu erhalten, wobei die Topologieaufbaustrategie den Typ der Netztopologie der Knoten angibt, die den virtuellen Knoten bilden; und
eine Topologieaufbaueinheit (63), die konfiguriert ist, den Topologieaufbau des virtuellen Knotens von oben nach unten, der in der hierarchischen Beziehung zwischen den Teilnetzen und der erhaltenen Topologieaufbaustrategie des virtuellen Knotens und den erhaltenen Informationen über die Knoten, die den virtuellen Knoten bilden, gezeigt ist, auszuführen;
eine Gruppierungsverarbeitungseinheit (64), die konfiguriert ist, die Knoten, die eine einzelne Netztopologie besitzen, in einem Netz zu gruppieren, wobei die Gruppierungsverarbeitungseinheit (64) Folgendes umfasst:
ein Teilnetz-Teilungsmodul (641), das konfiguriert ist, von der unteren Schicht des Netzes durch die Knoten (5, 8, 9, 10), die die einzelne Netztopologie in einer momentan verarbeiteten Schicht besitzen, einen oder mehrere virtuelle Knoten zu bilden, um ein Teilnetz der momentan verarbeiteten Schicht zu erhalten, **dadurch gekennzeichnet, dass** ein Ort jedes der virtuellen Knoten einem Ort von einem Knoten der Knoten, die eine einzelne Netztopologie besitzen, entspricht;
ein Modul (642) zum Aufbauen einer topologischen Beziehung, das konfiguriert ist,
eine topologische Verbindungsbeziehung zwischen dem virtuellen Knoten (A) und
den Knoten (3, 4, 6, 7), die in dem Teilnetz der momentan verarbeiteten Schicht nicht gruppiert werden, aufzubauen, um ein Teilnetz einer oberen Schicht zu erhalten,
wobei das Teilnetz der oberen Schicht eine einzelne Netztopologie besitzt; und
ein Setzmodul (643), das konfiguriert ist, eine Topologieaufbaustrategie des virtuellen Knotens in dem Teilnetz der momentan verarbeiteten Schicht und die Informationen über die Knoten, die den virtuellen Knoten bilden, zu setzen.

11. Topologieaufbauvorrichtung nach Anspruch 10, wobei, falls das Teilnetz der momentan verarbeiteten Schicht ein Teilnetz einer nicht unteren Schicht ist, die Informationserhalteeinheit (62) ferner konfiguriert ist, die Informationen über die virtuellen Knoten zu erhalten, die zu demselben Teilnetz wie der virtuelle Knoten gehören.

12. Topologieaufbauvorrichtung nach Anspruch 11, wobei die Topologieaufbaueinheit (63) Folgendes umfasst:
ein Beurteilungsmodul (631), das konfiguriert ist, von dem Teilnetz der oberen Schicht in der Menge der Teilnetze zu bestimmen, ob es virtuelle Knoten, die zu demselben Teilnetz wie der virtuelle Knoten gehören, in dem Teilnetz der momentan verarbeiteten Schicht gibt;
ein erstes Aufbaumodul (632), das konfiguriert ist, den Topologieaufbau des virtuellen Knotens in Übereinstimmung mit der Topologieaufbaustrategie, die dem virtuellen Knoten entspricht, und den Informationen über die Knoten, die den virtuellen Knoten bilden, auszuführen; oder den Topologieaufbau der virtuellen Knoten, die zu demselben Teilnetz wie der virtuelle Knoten gehören, in Übereinstimmung mit der Topologieaufbaustrategie, die den virtuellen Knoten entspricht, die zu demselben Teilnetz wie der virtuelle Knoten gehören, und den Informationen über die Knoten, die die virtuellen Knoten bilden, die zu demselben Teilnetz wie der virtuelle Knoten gehören, auszuführen, falls es virtuelle Knoten gibt,
die zu demselben Teilnetz wie der virtuelle Knoten gehören, und
ein zweites Aufbaumodul (633), das konfiguriert ist, den Topologieaufbau des virtuellen Knotens in Übereinstimmung mit der Topologieaufbaustrategie, die dem virtuellen Knoten entspricht, und den Informationen über die Knoten, die den virtuellen Knoten bilden, auszuführen, falls es keine virtuellen Knoten gibt, die zu demselben Teilnetz wie der virtuelle Knoten gehören.

13. Topologieaufbauvorrichtung nach Anspruch 12, wobei die Topologieaufbaueinheit (63) ferner Folgendes umfasst:
ein Knotenort-Setzmodul (634), das konfiguriert ist, die Aufbauorte des virtuellen Knotens und der virtuellen Knoten, die zu demselben Teilnetz wie der virtuelle Knoten gehören, in dem virtuellen Knoten des Teilnetzes der oberen Schicht zu setzen, oder einen Aufbauort des virtuellen Knotens in dem virtuellen Knoten des Teilnetzes der oberen Schicht zu setzen.

14. Netztopologie-Aufbauvorrichtung nach einem der Ansprüche 10 bis 13, die ferner Folgendes umfasst:
eine Aufbaueinstelleinheit (65), die konfiguriert ist, den Aufbau des Netzes, in dem der Topologieaufbau jedes der virtuellen Knoten bereits implementiert ist, einzustellen, um eine graphische Darstellung der Netztopologie zu erhalten.

15. Netztopologiesystem, **dadurch gekennzeichnet, dass** es Folgendes umfasst:
die Netztopologie-Aufbauvorrichtung nach einem der Ansprüche 10 bis 14; und
einen Plotter (92), der konfiguriert ist, eine graphische Darstellung der Netztopologie in Übereinstimmung mit einem Ergebnis des Topologieaufbaus der Netztopologie-Aufbauvorrichtung (91) zu zeichnen.

16. Computerprogrammprodukt, **dadurch gekennzeichnet, dass** es Computerprogrammcode umfasst, der die Computereinheit veranlasst, das Verfahren nach einem der Ansprüche 1 bis 10 auszuführen, wenn er durch eine Computereinheit ausgeführt wird.

## Revendications

1. Procédé d'agencement d'une topologie de réseau, comprenant :
l'obtention (11) d'un ensemble de sous-réseaux, dans lequel il existe une relation hiérarchique entre les sous-réseaux, un sous-réseau de la couche supérieure consiste en un noeud virtuel, un sous-réseau d'une couche non inférieure comprend au moins un noeud virtuel, et le noeud virtuel comprend au moins un noeud ou au moins un noeud virtuel d'une couche inférieure, dans lequel le noeud virtuel est composé des noeuds ayant la topologie de réseau unique dans la couche correspondante, et le sous-réseau de la couche non inférieure représente le sous-réseau de chaque couche à l'exception du sous-réseau de la couche la plus supérieure et du sous-réseau de la couche la plus inférieure ;
l'obtention (12) d'une politique d'agencement de topologie correspondant à un noeud virtuel dans un sous-réseau de chaque couche de l'ensemble de sous-réseaux et
d'informations de noeuds qui composent le noeud virtuel, dans lequel la politique d'agencement de topologie indique le type de la topologie de réseau des noeuds qui composent le noeud virtuel ; et
l'exécution (13) d'un agencement de topologie du noeud virtuel de haut en bas apparaissant dans la relation hiérarchique entre les sous-réseaux, et la politique d'agencement de topologie obtenue pour le noeud virtuel et les informations de noeuds qui composent le noeud virtuel, dans lequel, avant l'obtention (11) de l'ensemble hiérarchique de sous-réseaux, le procédé comprend en outre :
le regroupement de noeuds qui ont une topologie de réseau unique dans un réseau,
dans lequel le regroupement de noeuds d'une topologie de réseau unique dans le réseau comprend :
à partir de la couche inférieure du réseau, la composition, par des noeuds (5, 8, 9, 10) ayant la topologie de réseau unique dans une couche en cours de traitement, d'un ou
plusieurs noeuds virtuels afin d'obtenir un sous-réseau de la couche en cours de traitement, **caractérisé en ce qu'**un emplacement de chacun des noeuds virtuels correspond à un emplacement d'un noeud parmi les noeuds ayant la topologie de réseau unique ;
l'établissement d'une relation de connexion topologique entre le noeud virtuel (A) et
les noeuds (3, 4, 6, 7) qui ne sont pas regroupés en le sous-réseau de la couche en cours de traitement, afin d'obtenir un sous-réseau d'une couche supérieure, dans lequel le sous-réseau de la couche supérieure a une topologie de réseau unique ; et
la définition d'une politique d'agencement de topologie du noeud virtuel dans le sous-réseau de la couche en cours de traitement et d'informations des noeuds qui composent le noeud virtuel.

2. Procédé d'agencement de topologie de réseau selon la revendication 1, dans lequel, si les noeuds ayant une topologie de réseau unique dans une couche en cours de traitement composent de multiples noeuds virtuels, les noeuds virtuels appartiennent à un même sous-réseau, les noeuds qui composent chacun des noeuds virtuels qui appartiennent au même sous-réseau sont les mêmes, et le regroupement de noeuds ayant une topologie de réseau unique dans un réseau comprend en outre :
l'établissement d'une relation de connexion topologique entre les noeuds virtuels qui appartiennent au même sous-réseau conformément à une relation de connexion topologique entre des noeuds correspondant à des emplacements des noeuds virtuels.

3. Procédé d'agencement de topologie de réseau selon la revendication 1, dans lequel l'établissement d'une relation de connexion topologique entre le noeud virtuel (A) et les noeuds (3, 4, 6, 7) qui ne sont pas regroupés en le sous-réseau de la couche en cours de traitement comprend :
l'établissement de la relation de connexion topologique entre le noeud virtuel (A) et les noeuds (3, 4, 6, 7) qui ne sont pas regroupés en le sous-réseau de la couche en cours de traitement conformément à une relation de connexion topologique entre chaque noeud (5, 8, 9, 10) dans le sous-réseau de la couche en cours de traitement et
les noeuds (3, 4, 6, 7) qui ne sont pas regroupés en le sous-réseau de la couche en cours de traitement.

4. Procédé d'agencement de topologie de réseau selon la revendication 1, dans lequel, si le sous-réseau de la couche en cours de traitement est un sous-réseau d'une couche non inférieure, l'obtention de la politique d'agencement de topologie correspondant au noeud virtuel dans le sous-réseau de chaque couche et d'informations de noeuds qui composent le noeud virtuel comprend outre :
l'obtention d'informations de noeuds virtuels qui appartiennent au même sous-réseau que le noeud virtuel.

5. Procédé d'agencement de topologie de réseau selon la revendication 4, dans lequel l'exécution de l'agencement de topologie du noeud virtuel selon une relation hiérarchique entre les sous-réseaux, et la politique d'agencement de topologie obtenue du noeud virtuel et les informations des noeuds qui composent le noeud virtuel comprend :
à partir du sous-réseau de la couche supérieure de l'ensemble de sous-réseaux, le fait de déterminer s'il existe des noeuds virtuels qui appartiennent à un même sous-réseau que le noeud virtuel dans le sous-réseau de la couche en cours de traitement ;
s'il existe des noeuds virtuels qui appartiennent à un même sous-réseau que le noeud virtuel, l'exécution de l'agencement de topologie du noeud virtuel conformément à la politique d'agencement de topologie correspondant au noeud virtuel et aux informations des noeuds qui composent le noeud virtuel ; ou l'exécution de l'agencement de topologie de noeuds virtuels qui appartiennent à un même sous-réseau que le noeud virtuel conformément à la politique d'agencement de topologie correspondant aux noeuds virtuels qui appartiennent à un même sous-réseau que le noeud virtuel et aux informations des noeuds qui composent les noeuds virtuels qui appartiennent à un même sous-réseau que le noeud virtuel ;
s'il n'existe pas de noeuds virtuels qui appartiennent à un même sous-réseau que le noeud virtuel, l'exécution de l'agencement de topologie du noeud virtuel conformément à la politique d'agencement de topologie correspondant au noeud virtuel et aux informations des noeuds qui composent le noeud virtuel.

6. Procédé d'agencement de topologie de réseau selon la revendication 5, dans lequel, si le noeud virtuel dans le sous-réseau de la couche en cours de traitement correspond à un noeud virtuel d'une couche inférieure d'un noeud virtuel dans le sous-réseau de la couche supérieure, avant l'exécution de l'agencement de topologie du noeud virtuel conformément à la politique d'agencement de topologie correspondant au noeud virtuel et aux informations des noeuds qui composent le noeud virtuel ; ou l'exécution de l'agencement de topologie de noeuds virtuels qui appartiennent à un même sous-réseau que le noeud virtuel conformément à la politique d'agencement de topologie correspondant aux noeuds virtuels qui appartiennent à un même sous-réseau que le noeud virtuel et aux informations des noeuds qui composent les noeuds virtuels qui appartiennent à un même sous-réseau que le noeud virtuel, le procédé comprend en outre :
la définition d'emplacements d'agencement du noeud virtuel et des noeuds virtuels qui appartiennent à un même sous-réseau que le noeud virtuel dans le noeud virtuel du sous-réseau de la couche supérieure ; ou
si le noeud virtuel, dans le sous-réseau de la couche en cours de traitement,
correspond à un noeud virtuel d'une couche inférieure d'un noeud virtuel dans le sous-réseau de la couche supérieure, avant l'exécution de l'agencement de topologie du noeud virtuel conformément à la politique d'agencement de topologie correspondant au noeud virtuel et aux informations des noeuds qui composent le noeud virtuel, le procédé comprend en outre : la définition d'un emplacement d'agencement et d'une direction d'agencement du noeud virtuel dans le noeud virtuel du sous-réseau de la couche supérieure.

7. Procédé d'agencement de topologie de réseau selon la revendication 6, dans lequel la définition des emplacements d'agencement du noeud virtuel et des noeuds virtuels qui appartiennent à un même sous-réseau que le noeud virtuel dans le noeud virtuel du sous-réseau de la couche supérieure comprend :
la détermination de noeuds correspondant au noeud virtuel et aux noeuds virtuels qui appartiennent au même sous-réseau que le noeud virtuel dans un sous-réseau d'une couche inférieure de la couche en cours de traitement et, respectivement, la définition d'emplacements des noeuds correspondants dans le sous-réseau de la couche inférieure en tant qu'emplacements du noeud virtuel et des noeuds virtuels qui appartiennent au même sous-réseau que le noeud virtuel dans les noeuds virtuels du sous-réseau de la couche supérieure de la couche en cours de traitement ; ou
la définition de l'emplacement d'agencement et de la direction d'agencement du noeud virtuel dans le noeud virtuel du sous-réseau de la couche supérieure comprend :
la détermination d'un noeud correspondant au noeud virtuel dans le sous-réseau de la couche inférieure de la couche en cours de traitement ; la définition d'un emplacement du noeud dans le sous-réseau de la couche inférieure en tant qu'emplacement du noeud virtuel dans le noeud virtuel du sous-réseau de la couche supérieure de la couche en cours de traitement ; et la définition de la direction d'agencement du noeud virtuel dans le noeud virtuel du sous-réseau de la couche supérieure de la couche en cours de traitement.

8. Procédé d'agencement de topologie de réseau selon l'une quelconque des revendications 1 à 7, comprenant en outre :
l'exécution d'un ajustement d'agencement du réseau dans lequel l'agencement de topologie de chacun des noeuds virtuels est déjà mis en oeuvre afin d'obtenir un diagramme de topologie de réseau.

9. Procédé d'agencement de topologie de réseau selon la revendication 8, dans lequel l'exécution de l'ajustement d'agencement du réseau dans lequel l'agencement de topologie de chacun des noeuds virtuels est déjà mis en oeuvre comprend :
l'exécution d'une analyse de chevauchement des noeuds virtuels dans le réseau, et
l'ajustement de l'agencement de topologie des noeuds virtuels lorsque les noeuds virtuels se chevauchent ou se croisent.

10. Dispositif d'agencement de topologie de réseau, comprenant :
une unité d'obtention d'ensemble de sous-réseaux (61), configurée de manière à obtenir un ensemble de sous-réseaux, dans lequel il existe une relation hiérarchique entre les sous-réseaux, un sous-réseau de la couche supérieure consiste en un noeud virtuel, un sous-réseau d'une couche non inférieure comprend au moins un noeud virtuel, et le noeud virtuel comprend au moins un noeud ou au moins un noeud virtuel d'une couche inférieure, dans lequel le noeud virtuel est composé des noeuds ayant la topologie de réseau unique dans la couche correspondante, et le sous-réseau de la couche non inférieure représente le sous-réseau de chaque couche à l'exception du sous-réseau de la couche la plus supérieure et du sous-réseau de la couche la plus inférieure ;
une unité d'obtention d'informations (62), configurée pour obtenir une politique d'agencement de topologie correspondant à un noeud virtuel dans un sous-réseau de chaque couche de l'ensemble de sous-réseaux et des informations de noeuds qui composent le noeud virtuel, dans lequel la politique d'agencement de topologie indique le type de la topologie de réseau des noeuds qui composent le noeud virtuel ;
et
une unité d'agencement de topologie (63), configurée pour exécuter de haut en bas l'agencement de topologie du noeud virtuel apparaissant dans la relation hiérarchique entre les sous-réseaux, et la politique d'agencement de topologie obtenue pour le noeud virtuel et les informations des noeuds qui composent le noeud virtuel ;
une unité de traitement de regroupement (64), configurée pour regrouper des noeuds ayant une topologie de réseau unique dans un réseau, dans lequel l'unité de traitement de regroupement (64) comprend :
un module de division en sous-réseaux (641), configuré pour, à partir de la couche inférieure du réseau, composer, par des noeuds (5, 8, 9, 10) qui ont la topologie de réseau unique dans une couche en cours de traitement, un ou plusieurs noeuds virtuels afin d'obtenir un sous-réseau de la couche en cours de traitement, **caractérisé en ce qu'**un emplacement de chacun des noeuds virtuels correspond à un emplacement d'un noeud parmi les noeuds ayant la topologie de réseau unique ;
un module d'établissement de relation topologique (642), configuré pour établir une relation de connexion topologique entre le noeud virtuel (A) et les noeuds (3, 4, 6, 7) qui ne sont pas regroupés en le sous-réseau de la couche en cours de traitement, afin d'obtenir un sous-réseau d'une couche supérieure, dans lequel le sous-réseau de la couche supérieure a une topologie de réseau unique ; et
un module de définition (643), configuré pour définir la politique d'agencement de topologie du noeud virtuel dans le sous-réseau de la couche en cours de traitement et les informations des noeuds qui composent le noeud virtuel.

11. Dispositif d'agencement de topologie selon la revendication 10, dans lequel, si le sous-réseau de la couche en cours de traitement est un sous-réseau d'une couche non inférieure, l'unité d'obtention d'informations (62) est en outre configurée pour obtenir des informations de noeuds virtuels qui appartiennent au même sous-réseau que le noeud virtuel.

12. Dispositif d'agencement de topologie selon la revendication 11, dans lequel l'unité d'agencement de topologie (63) comprend :
un module d'évaluation (631), configuré pour déterminer, à partir du sous-réseau de la couche supérieure dans l'ensemble de sous-réseaux, s'il existe des noeuds virtuels qui appartiennent à un même sous-réseau que le noeud virtuel dans le sous-réseau de la couche en cours de traitement ;
un premier module d'agencement (632), configuré pour exécuter l'agencement de topologie du noeud virtuel conformément à la politique d'agencement de topologie correspondant au noeud virtuel et aux informations des noeuds qui composent le noeud virtuel ; ou pour exécuter l'agencement de topologie de noeuds virtuels qui appartiennent à un même sous-réseau que le noeud virtuel conformément à la politique d'agencement de topologie correspondant aux noeuds virtuels qui appartiennent à un même sous-réseau que le noeud virtuel et aux informations des noeuds qui composent les noeuds virtuels qui appartiennent à un même sous-réseau que le noeud virtuel s'il existe des noeuds virtuels qui appartiennent à un même sous-réseau que le noeud virtuel ; et
un second module d'agencement (633), configuré pour exécuter l'agencement de topologie du noeud virtuel conformément à la politique d'agencement de topologie correspondant au noeud virtuel et aux informations des noeuds qui composent le noeud virtuel s'il n'existe pas de noeuds virtuels qui appartiennent à un même sous-réseau que le noeud virtuel.

13. Dispositif d'agencement de topologie selon la revendication 12, dans lequel l'unité d'agencement de topologie (63) comprend en outre:
un module de définition d'emplacement de noeud (634), configuré pour définir des emplacements d'agencement du noeud virtuel et des noeuds virtuels qui appartiennent à un même sous-réseau que le noeud virtuel dans le noeud virtuel du sous-réseau de la couche supérieure, ou pour définir un emplacement d'agencement du noeud virtuel dans le noeud virtuel du sous-réseau de la couche supérieure.

14. Dispositif d'agencement de topologie de réseau selon l'une quelconque des revendications 10 à 13, comprenant en outre :
une unité d'ajustement d'agencement (65), configurée pour ajuster l'agencement du réseau dans lequel l'agencement de topologie de chacun des noeuds virtuels est déjà mis en oeuvre afin d'obtenir un diagramme de topologie de réseau.

15. Système de topologie de réseau, **caractérisé en ce qu'**il comprend :
l'appareil d'agencement de topologie de réseau selon l'une quelconque des revendications 10 à 14 ; et un traceur (92), configuré pour tracer un diagramme de topologie de réseau conformément à un résultat d'agencement de topologie de l'appareil d'agencement de topologie de réseau (91).

16. Produit de programme informatique, **caractérisé en ce qu'**il comprend un code de programme informatique, qui provoque l'exécution par l'unité informatique du procédé selon l'une quelconque des revendications 1 à 10, lorsqu'il est exécuté par une unité informatique.
